# EUROPÄISCHE PATENTSCHRIFT

(11) **EP 3 390 203 B1**
(45) Veröffentlichungstag und Bekanntmachung des Hinweises auf die Patenterteilung: **06.11.2019**
(21) Anmeldenummer: 16804797.5
(22) Anmeldetag: 30.11.2016
(51) Int. Cl.: B62D 21/16, B60K 15/07, B60K 15/063, B60K 15/03

(54) **FAHRZEUG MIT LASTTRAGENDEM DRUCKTANK**
VEHICLE HAVING A LOAD-BEARING PRESSURE TANK
VÉHICULE DOTÉ D'UN RÉSERVOIR SOUS PRESSION PORTEUR

(30) Priorität: 16.12.2015 DE 102015225385
(43) Veröffentlichungstag der Anmeldung: 24.10.2018
(73) Patentinhaber: Bayerische Motoren Werke Aktiengesellschaft, 80809 München (DE)
(72) Erfinder: STAHL, Hans-Ulrich, 80807 München (DE)
(86) Internationale Anmeldenummer: PCT/EP2016/079318
(87) Internationale Veröffentlichungsnummer: WO 2017/102334

(56) Entgegenhaltungen:
- EP-A2- 2 684 777
- DE-A1-102011 051 436
- DE-A1-102014 209 912

## Beschreibung

Vorliegende Erfindung betrifft ein Fahrzeug, insbesondere ein 2-spuriges Kraftfahrzeug. In dem Fahrzeug ist ein Drucktank angeordnet, der beispielsweise zur Bevorratung von Wasserstoff für einen Verbrennungsmotor oder Brennstoffzellen des Fahrzeugs genutzt wird.

Druckbehälter dehnen sich aus, in Abhängigkeit von Faktoren wie dem Innendruck oder (insbesondere bei kryogenen Druckbehältern) der Temperatur. Aus diesem Grund werden im Stand der Technik Druckbehälter nach dem Festlager-Loslager-Prinzip an die Karosserie des Fahrzeugs angebunden. Aus dem Stand der Technik sind Lagerungsanordnungen bekannt, die zwischen dem Drucktank und der Karosserie des Fahrzeugs einen Ausgleich in unterschiedliche Richtungen ermöglichen.

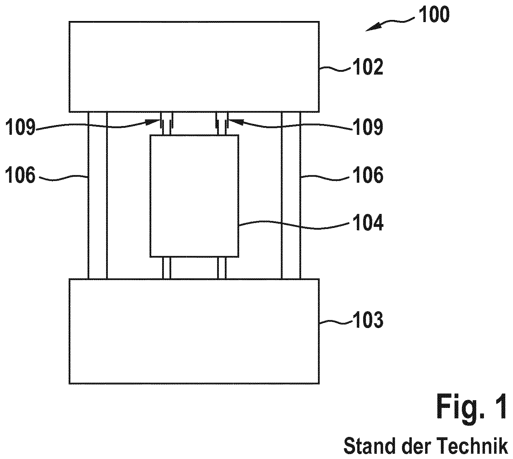

Figur 1 zeigt in schematischer Ansicht ein Fahrzeug 100 nach dem Stand der Technik. Dieses Fahrzeug 100 umfasst einen Vorderachsträger 102, einen Hinterachsträger 103, zwei Längsträger 106 und einen Drucktank 104. Die beiden Längsträger 106 sind steif mit dem Vorderachsträger 102 und dem Hinterachsträger 103 verbunden. Der Drucktank 104 ist ebenfalls zwischen Vorderachsträger 102 und Hinterachsträger 103 angeordnet; allerdings sind hier Längsrichtungs-Loslager 109 vorgesehen. Der Drucktank 104 kann sich somit in seiner Länge ausdehnen, ohne dabei den Abstand zwischen Vorderachsträger 102 und Hinterachsträger 103 zu verändern.
Die DE 10 2011 051436 A1 offenbart ein Fahrzeug umfassend einen Vorderachsträger zur Befestigung vorderer Radaufhängungen, einen Hinterachsträger zur Befestigung hinterer Radaufhängungen, wobei einen Drucktank den Vorderachsträger mit dem Hinterachsträger lasttragend verbindet.
Es ist Aufgabe vorliegender Erfindung, ein Fahrzeug anzugeben, in dem bei kostengünstiger Herstellung und Montage ein Drucktank bauraumoptimiert, gewichtsoptimiert und betriebssicher angeordnet ist. Insbesondere soll ermöglicht werden, dass der Drucktank Betriebslasten der Karosserie übernimmt und die Karosserie selbst somit leichter gebaut werden kann.

Die Lösung dieser Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch ein Fahrzeug. Das Fahrzeug ist insbesondere ausgebildet als 2-spuriges Kraftfahrzeug. Das Fahrzeug umfasst einen Vorderachsträger und einen Hinterachsträger. Die beiden Achsträger dienen jeweils zur Befestigung von Radaufhängungen. Die Begriffe "Vorderachsträger" und "Hinterachsträger" sind breit zu verstehen und können zum Beispiel auch als Vorderwagen bzw. Hinterwagen, Fahrschemel oder Hilfsrahmen bezeichnet werden.

Ferner umfasst das Fahrzeug eine tragende erste Längsstruktur. Diese erste Längsstruktur ist als steifer Drucktank ausgebildet. Der Drucktank dient zur Aufnahme eines Brennstoffs für das Fahrzeug. Der Brennstoff wird insbesondere in einem Verbrennungsmotor oder in einer Brennstoffzelle des Fahrzeugs verwendet. In Fahrzeugen verwendete Drucktanks müssen einerseits den Brennstoff mit hohem Druck halten und andererseits Crash-Anforderungen erfüllen. Deshalb sind die Drucktanks sehr steife Baugruppen. Im Rahmen dieser Erfindung wird der Drucktank zumindest bezüglich der Längsrichtung starr, d.h. ohne der Möglichkeit eines Längenausgleich in Fahrzeuglängsrichtung, mit dem Vorderachsträger und dem Hinterachsträger verbunden. Dadurch kann der steife Drucktank lasttragend eingesetzt werden. Dies führt zu einer einfachen und platzsparenden Befestigung des Drucktanks am Vorderachsträger und am Hinterachsträger sowie zu Einsparungen bezüglich Bauraum, Material und Kosten in der verbleibenden Fahrzeugstruktur, da hier weniger Lasten übertragen werden müssen.

Die starre Anbindung des Drucktanks wird wie folgt erreicht: die Verbindung zwischen Drucktank und Vorderachsträger und die Verbindung zwischen Drucktank und Hinterachsträger erfolgt lediglich durch sogenannte Längsrichtungs-Festlager. Diese Längsrichtungs-Festlager ermöglichen in Fahrzeuglängsrichtung keinen Längenausgleich, sind also bezüglich der Fahrzeuglängsrichtung starr. Besonders bevorzugt wird in den Längsrichtungs-Festlagern auf elastische Elemente, wie beispielsweise Gummi, vollständig verzichtet.

Es gibt zumindest zwei dieser Längsrichtungs-Festlager, eines zwischen Drucktank und Vorderachsträger und eines zwischen Drucktank und Hinterachsträger. Des Weiteren ist auch vorgesehen, dass die Längsrichtungs-Festlager durch mehrere Einzellager gebildet sind, die wiederum in ihrer Gesamtheit die gewünschte Funktion, nämlich die Starrheit in Fahrzeuglängsrichtung erfüllen.

Das Fahrzeug umfasst bevorzugt eine Fahrgastzelle die auf dem Vorderachsträger und dem Hinterachsträger befestigt ist. Üblicherweise erfahren die Fahrgastzelle und der Drucktank unterschiedliche Ausdehnung in Fahrzeuglängsrichtung, aufgrund von unterschiedlichen Materialien und/oder unterschiedlichen Temperaturen Der Drucktank unterliegt auch einer druckabhängigen Längenausdehnung. Deshalb ist bevorzugt vorgesehen, dass in der Einheit aus Vorderachsträger, Fahrgastzelle und Hinterachsträger ein Längenausgleich in Fahrzeuglängsrichtung möglich ist. Dies wird insbesondere wie folgt erreicht:
Bevorzugt ist vorgesehen, dass die Fahrgastzelle über zumindest ein Längsrichtungs-Loslager am Vorderachsträger befestigt ist. Im Rahmen dieser Erfindung definierte "Längsrichtungs-Loslager" ermöglichen in Fahrzeuglängsrichtung einen Längenausgleich. Die Längsrichtungs-Loslager können durch mehrere Einzellager gebildet sein, die wiederum in ihrer Gesamtheit die gewünschte Funktion, nämlich den Längenausgleich ermöglichen.

Zusätzlich oder alternativ kann die Fahrgastzelle über zumindest ein Längsrichtungs-Loslager am Hinterachsträger befestigt sein.

Alternativ oder zusätzlich zu den Längsrichtungs-Loslagern, ist bevorzugt vorgesehen, in die Fahrgastzelle eine Längsausgleichsvorrichtung zu integrieren. Im Rahmen dieser Erfindung definierte "Längsausgleichsvorrichtungen" ermöglichen auf mechanischem Wege, beispielsweise durch zwei aneinander längsbeweglich geführte Elemente, oder durch eine entsprechende Materialwahl, beispielsweise gummielastische Elemente, einen Längenausgleich in Fahrzeuglängsrichtung.

Das Fahrzeug umfasst bevorzugt eine tragende zweite Längsstruktur, die den Vorderachsträger mit dem Hinterachsträger lasttragend verbindet. Die zweite Längsstruktur umfasst vorzugsweise zumindest einen Längsträger.

Die zweite Längsstruktur wird zusätzlich zum Drucktank für die Verbindung zwischen Vorderachsträger und Hinterachsträger verwendet. Da erfindungsgemäß der Drucktank als lasttragende erste Längsstruktur genutzt wird, kann die zweite Längsstruktur relativ leichtbauend ausgebildet werden.

Üblicherweise erfahren die zweite Längsstruktur und der Drucktank unterschiedliche Ausdehnungen in Fahrzeuglängsrichtung. Deshalb ist bevorzugt vorgesehen, dass in der Einheit aus Vorderachsträger, zweite Längsstruktur und Hinterachsträger ein Längenausgleich in Fahrzeuglängsrichtung möglich ist:
Bevorzugt ist vorgesehen, dass die zweite Längsstruktur über zumindest ein Längsrichtungs-Loslager am Vorderachsträger befestigt ist. Zusätzlich oder alternativ kann die zweite Längsstruktur über zumindest ein Längsrichtungs-Loslager am Hinterachsträger befestigt sein. Alternativ oder zusätzlich zu den Längsrichtungs-Loslagern, ist bevorzugt vorgesehen, in die zweite Längsstruktur eine Längsausgleichsvorrichtung zu integrieren.

Die zweite Längsstruktur umfasst vorzugsweise zwei Längsträger. Der Drucktank ist dabei zwischen den beiden Längsträgern angeordnet. Dadurch befindet sich der Drucktank bezüglich der Fahrzeugquerrichtung mittig im Fahrzeug und ist crashsicher positioniert.

Der Drucktank kann, je nach Betriebszustand, seine Länge um mehrere Millimeter verändern. Deshalb ist bevorzugt vorgesehen, dass die Gesamtheit der Längsrichtungs-Loslager und Längsausgleichsvorrichtungen dazu ausgebildet ist, zwischen Vorderachsträger und Hinterachsträger einen Längenausgleich von mindestens 3 mm, vorzugsweise mindestens 8 mm, zu ermöglichen.

Die erfindungsgemäß verwendeten Längsrichtungs-Festlager zwischen Drucktank und Vorderachsträger bzw. zwischen Drucktank und Hinterachsträger ermöglichen keinen Längenausgleich in Fahrzeuglängsrichtung. Allerdings kann sich der Drucktank auch in Fahrzeughochrichtung und Fahrzeugquerrichtung ausdehnen. Für den Fall von zylindrischen Drucktanks, die mit ihrer Zylinderachse in Fahrzeuglängsrichtung verbaut sind, wird neben der Längsausdehnung auch eine Ausdehnung in Radialrichtung stattfinden.

Gemäß einer ersten Variante, sind die Längsrichtungs-Festlager auch bezüglich der Fahrzeughochrichtung und/oder Fahrzeugquerrichtung starr und ermöglichen in diesen Richtungen keinen Ausgleich zwischen Drucktank und Vorderachsträger bzw. Hinterachsträger.

Eine zweite Variante sieht vor, dass die Längsrichtungs-Festlager dazu ausgebildet sind, einen Höhenausgleich zwischen Drucktank und Vorderachsträger und/oder zwischen Drucktank und Hinterachsträger in Fahrzeughochrichtung zu ermöglichen. Zusätzlich oder alternativ ist bevorzugt vorgesehen, dass die Längsrichtungs-Festlager dazu ausgebildet sind einen Querausgleich zwischen Drucktank und Vorderachsträger und/oder zwischen Drucktank und Hinterachsträger in Fahrzeugquerrichtung zu ermöglichen.

Bei der Integration eines Querausgleichs und/oder Höhenausgleichs in die Längsrichtungs-Festlager, können elastische Elemente verwendet werden, die eben diesen Querausgleich oder Höhenausgleich ermöglichen. Dabei werden die elastischen Elemente so ausgewählt und angeordnet, dass sie keinen oder annähernd keinen Längenausgleich in Fahrzeuglängsrichtung ermöglichen.

Der Drucktank ist insbesondere zur Aufnahme von Wasserstoff ausgebildet. Drucktanks für Wasserstoff sind aufgrund ihrer Auslegung für einen Nominaldruck von in der Regel 350 oder 700 bar besonders steif und können daher optimal für die lasttragende Integration des Drucktanks im Fahrzeug verwendet werden.

Weitere Einzelheiten, Merkmale und Vorteile der Erfindung ergeben sich aus der nachfolgenden Beschreibung und den Figuren. Es zeigen:
- Figur 1: eine Ansicht von unten eines Fahrzeugs nach dem Stand der Technik,
- Figur 2: eine Ansicht von unten eines erfindungsgemäßen Fahrzeugs gemäß einem Ausführungsbeispiel, und
- Figur 3: eine Seitenansicht des erfindungsgemäßen Fahrzeugs gemäß dem Ausführungsbeispiel.

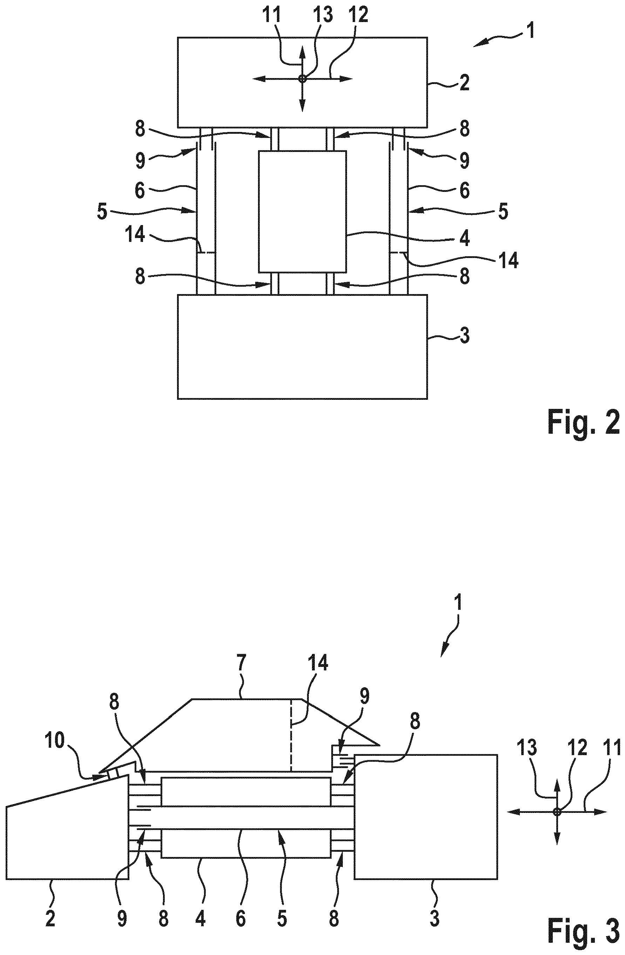

Die Figuren 2 und 3 zeigen in schematisch vereinfachter Ansicht ein Fahrzeug 1 gemäß einem Ausführungsbeispiel. Dabei handelt es sich um ein 2-spuriges Kraftfahrzeug. Figur 2 zeigt das Fahrzeug 1 in einer Ansicht von unten. Figur 3 zeigt eine Seitenansicht.

Bezüglich der Fahrtrichtung des Fahrzeugs 1 ist eine Fahrzeuglängsrichtung 11 definiert. Senkrecht zu der Fahrzeuglängsrichtung 11 stehen eine Fahrzeugquerrichtung 12 und eine Fahrzeughochrichtung 13.

Das Fahrzeug 1 umfasst einen Vorderachsträger 2, einen Hinterachsträger 3 und eine Fahrgastzelle 7. Am Vorderachsträger 2 werden nicht dargestellte vordere Radaufhängungen befestigt. Am Hinterachsträger 3 werden nicht dargestellte hintere Radaufhängungen befestigt. Gemäß der Darstellung in Figur 3 befindet sich über dem Vorderachsträger 2 und dem Hinterachsträger 3 die Fahrgastzelle 7.

Die lasttragende Verbindung zwischen dem Vorderachsträger 2 und dem Hinterachsträger 3 erfolgt durch einen Drucktank 4. Dieser Drucktank 4 ist als "erste tragende Längsstruktur" des Fahrzeugs 1 ausgebildet. Um seine Funktion als tragende Längsstruktur zu erfüllen, ist der Drucktank 4 starr mit dem Vorderachsträger 2 und dem Hinterachsträger 3 verbunden. Diese starre Verbindung erfolgt über Längsrichtungs-Festlager 8.

Die Längsrichtungs-Festlager 8 ermöglichen keinen Längenausgleich bezüglich der Fahrzeuglängsrichtung 11. Dadurch können ohne Weiteres Lasten zwischen dem Vorderachsträger 2 und dem Hinterachsträger 3 über den Drucktank 4 übertragen werden.

Zusätzlich zur ersten tragenden Längsstruktur, gebildet durch den Drucktank 4, umfasst das Fahrzeug 1 eine zweite tragende Längsstruktur 5. Die zweite tragende Längsstruktur 5 ist im gezeigten Ausführungsbeispiel durch zwei Längsträger 6 gebildet. Jeder der Längsträger 6 verbindet den Vorderachsträger 2 mit dem Hinterachsträger 3. Der Drucktank 4 ist zwischen den beiden Längsträgern 6 angeordnet.

Erfindungsgemäß erfolgt in der Einheit aus Vorderachsträger 2, Drucktank 4 und Hinterachsträger 3 kein Längenausgleich in Fahrzeuglängsrichtung 11. Dementsprechend ist bevorzugt vorgesehen, dass dieser Längenausgleich in der zweiten tragenden Längsstruktur 5 und/oder der Fahrgastzelle 7 erfolgt. Hierzu können an unterschiedlichen Stellen Längsrichtungs-Loslager 9 und/oder Längsausgleichsvorrichtungen 14 angeordnet werden. In ihrer Gesamtheit ermöglichen diese Längsrichtungs-Loslager 9 und Längsausgleichsvorrichtungen 14 den notwendigen Längenausgleich in Fahrzeuglängsrichtung 11 zwischen Vorderachsträger 2 und Hinterachsträger 3.

In dem gezeigten Ausführungsbeispiel sind zwischen den Längsträgern 6 und dem Vorderachsträger 2 Längsrichtungs-Loslager 9 angeordnet. Die Fahrgastzelle 7 ist über ein fahrgastraumseitiges Festlager 10 steif mit dem Vorderachsträger 2 verbunden. Zwischen Fahrgastzelle 7 und Hinterachsträger 3 ist ein Längsrichtungs-Loslager 9 angeordnet.

Gestrichelte Linien in der Fahrgastzelle 7 und in den Längsträgern 6 zeigen rein schematisch die Längsausgleichsvorrichtungen 14. Zusätzlich oder anstatt der Längsrichtungs-Loslager 9 können diese Längsausgleichsvorrichtungen 14, nicht an den Schnittstellen sondern in den jeweiligen Baugruppen für den Längenausgleich in Fahrzeuglängsrichtung 11 sorgen.

Die Fahrgastzelle 7 kann auch starr mit der zweiten Längsstruktur 5, insbesondere den beiden Längsträgern 6, verbunden sein. Die Fahrgastzelle 7 zusammen mit der zweiten Längsstruktur 5 würde dabei eine Einheit bilden, die als Karosserie bezeichnet werden kann. Bevorzugt ist vorgesehen, dass zwischen dieser Karosserie und der verbleibenden Struktur aus Vorderachsträger 2, Hinterachsträger 3 und Drucktank 4 ein Längenausgleich in Fahrzeuglängsrichtung 11 erfolgt. Dies kann durch unterschiedliche Anordnung von Längsrichtungs-Loslagern 9 und/oder Längsausgleichsvorrichtungen 14 erreicht werden.

### Bezugszeichenliste:

1 Fahrzeug
2 Vorderachsträger
3 Hinterachsträger
4 erste tragende Längsstruktur ausgebildet als steifer Drucktank
5 zweite tragende Längsstruktur
6 Längsträger
7 Fahrgastzelle
8 Längsrichtungs-Festlager
9 Längsrichtungs-Loslager
10 fahrgastraumseitiges Festlager
11 Fahrzeuglängsrichtung
12 Fahrzeugquerrichtung
13 Fahrzeughochrichtung
14 Längsausgleichsvorrichtung

100 Fahrzeug nach dem Stand der Technik
102 Vorderachsträger nach dem Stand der Technik
103 Hinterachsträger nach dem Stand der Technik
104 Drucktank nach dem Stand der Technik
106 Längsträger nach dem Stand der Technik
109 Längsrichtungs-Loslager nach dem Stand der Technik

## Patentansprüche

1. Fahrzeug (1) umfassend
• einen Vorderachsträger (2) zur Befestigung vorderer Radaufhängungen,
• einen Hinterachsträger (3) zur Befestigung hinterer Radaufhängungen, und
• eine tragende erste Längsstruktur ausgebildet als steifer Drucktank (4) zur Aufnahme eines Brennstoffs für das Fahrzeug,
• wobei der Drucktank (4) den Vorderachsträger (2) mit dem Hinterachsträger (3) lasttragend verbindet, und
• wobei die Verbindung zwischen Drucktank (4) und Vorderachsträger (2) und zwischen Drucktank (4) und Hinterachsträger (3) jeweils lediglich durch Längsrichtungs-Festlager (8) ausgebildet ist, die in Fahrzeuglängsrichtung (11) keinen Längenausgleich ermöglichen.

2. Fahrzeug nach Anspruch 1, **gekennzeichnet durch** eine Fahrgastzelle (7), die auf dem Vorderachsträger (2) und dem Hinterachsträger (3) befestigt ist,
• wobei die Fahrgastzelle (7) über zumindest ein Längsrichtungs-Loslager (9) am Vorderachsträger (2) befestigt ist, und/oder
• wobei die Fahrgastzelle (7) über zumindest ein Längsrichtungs-Loslager (9) am Hinterachsträger (3) befestigt ist, und/oder
• wobei eine Längsausgleichsvorrichtung (14) in die Fahrgastzelle (7) integriert ist.

3. Fahrzeug nach einem der vorhergehenden Ansprüche, **gekennzeichnet durch** eine tragende zweite Längsstruktur (5), die den Vorderachsträger (2) mit dem Hinterachsträger (3) lasttragend verbindet
• wobei die zweite Längsstruktur (5) über zumindest ein Längsrichtungs-Loslager (9) am Vorderachsträger (2) befestigt ist, und/oder
• wobei die zweite Längsstruktur (5) über zumindest ein Längsrichtungs-Loslager (9) am Hinterachsträger (3) befestigt ist, und/oder
• wobei eine Längsausgleichsvorrichtung (14) in die zweite Längsstruktur (5) integriert ist.

4. Fahrzeug nach Anspruch 3, **dadurch gekennzeichnet, dass** die tragende zweite Längsstruktur (5) zumindest einen Längsträger (6) umfasst, der im Wesentlichen parallel zum Drucktank (4) angeordnet ist.

5. Fahrzeug nach Anspruch 4, **dadurch gekennzeichnet, dass** die tragende zweite Längsstruktur (5) zumindest zwei Längsträger (6) umfasst, wobei der Drucktank (4) zwischen den beiden Längsträgern (6) angeordnet ist.

6. Fahrzeug nach einem der Ansprüche 2 bis 5, **dadurch gekennzeichnet, dass** die Längsrichtungs-Loslager (9) und Längsausgleichsvorrichtungen (14) dazu ausgebildet sind, zwischen Vorderachsträger (2) und Hinterachsträger (3) einen Längenausgleich vom mindestens 3 mm, vorzugsweise mindestens 8 mm, zu ermöglichen.

7. Fahrzeug nach einem der vorhergehenden Ansprüche, **dadurch gekennzeichnet, dass** die Längsrichtungs-Festlager (8) dazu ausgebildet sind, einen Höhenausgleich zwischen dem Drucktank (4) und dem Vorderachsträger (2) und/oder zwischen dem Drucktank (4) und dem Hinterachsträger (3) in Fahrzeughochrichtung (13) zu ermöglichen.

8. Fahrzeug nach einem der vorhergehenden Ansprüche, **dadurch gekennzeichnet, dass** die Längsrichtungs-Festlager (8) dazu ausgebildet sind, einen Querausgleich zwischen dem Drucktank (4) und dem Vorderachsträger (2) und/oder zwischen dem Drucktank (4) und dem Hinterachsträger (3) in Fahrzeugquerrichtung (12) zu ermöglichen.

9. Fahrzeug nach einem der vorhergehenden Ansprüche, **dadurch gekennzeichnet, dass** der Drucktank (4) zur Aufnahme von Wasserstoff ausgebildet ist.

## Claims

1. A vehicle (1) comprising
• a front axle carrier (2) for fastening front wheel suspensions,
• a rear axle carrier (3) for fastening rear wheel suspensions, and
• a load-bearing first longitudinal structure designed as a rigid pressure tank (4) for holding a fuel for the vehicle,
• wherein the pressure tank (4) connects the front axle carrier (2) to the rear axle carrier (3) in a load-bearing manner, and
• wherein the connection between the pressure tank (4) and front axle carrier (2) and between the pressure tank (4) and rear axle carrier (3) is formed in each case merely by longitudinal-direction fixed bearings (8) that do not enable length compensation in the vehicle longitudinal direction (11).

2. A vehicle according to claim 1, **characterised by** a passenger compartment (7) that is fastened to the front axle carrier (2) and the rear axle carrier (3),
• wherein the passenger compartment (7) is fastened to the front axle carrier (2) via at least one longitudinal-direction floating bearing (9), and/or
• wherein the passenger compartment (7) is fastened to the rear axle carrier (3) via at least one longitudinal-direction floating bearing (9), and/or
• wherein a length compensation device (14) is integrated in the passenger compartment (7).

3. A vehicle according to either one of the preceding claims, **characterised by** a load-bearing second longitudinal structure (5), which connects the front axle carrier (2) to the rear axle carrier (3) in a load-bearing manner,
• wherein the second longitudinal structure (5) is fastened to the front axle carrier (2) via at least one longitudinal-direction floating bearing (9), and/or
• wherein the second longitudinal structure (5) is fastened to the rear axle carrier (3) via at least one longitudinal-direction floating bearing (9), and/or
• wherein a length compensation device (14) is integrated in the second longitudinal structure (5).

4. A vehicle according to claim 3, **characterised in that** the load-bearing second longitudinal structure (5) comprises at least one side member (6), which is arranged substantially parallel to the pressure tank (4).

5. A vehicle according to claim 4, **characterised in that** the load-bearing second longitudinal structure (5) comprises at least two side members (6), wherein the pressure tank (4) is arranged between the two side members (6).

6. A vehicle according to any one of claims 2 to 5, **characterised in that** the longitudinal-direction floating bearings (9) and length compensation devices (14) are designed to enable length compensation of at least 3 mm, preferably at least 8 mm, between the front axle carrier (2) and rear axle carrier (3).

7. A vehicle according to any one of the preceding claims, **characterised in that** the longitudinal-direction fixed bearings (8) are designed to enable height compensation between the pressure tank (4) and the front axle carrier (2) and/or between the pressure tank (4) and the rear axle carrier (3) in the vehicle height direction (13).

8. A vehicle according to any one of the preceding claims, **characterised in that** the longitudinal-direction fixed bearings (8) are designed to enable transverse compensation between the pressure tank (4) and the front axle carrier (2) and/or between the pressure tank (4) and the rear axle carrier (3) in the vehicle transverse direction (12).

9. A vehicle according to any one of the preceding claims, **characterised in that** the pressure tank (4) is designed to hold hydrogen.

## Revendications

1. Véhicule automobile (1) comprenant :
- un support d'essieu avant (2) permettant la fixation de suspensions de roues avant,
- un support d'essieu arrière (3) permettant la fixation de suspensions de roues arrière, et
- une première structure longitudinale porteuse réalisée sous la forme d'un réservoir sous pression rigide (4) permettant de recevoir un carburant pour le véhicule,
- le réservoir sous pression (4) reliant en supportant la charge le support d'essieu avant (2) au support d'essieu arrière (3), et
- la liaison entre le réservoir sous pression (4) et le support d'essieu avant (2) et entre le réservoir sous pression (4) et le support d'essieu arrière (3) étant respectivement uniquement réalisée par des paliers fixes en direction longitudinale (8) qui ne permettent aucun équilibrage en longueur dans la direction longitudinale du véhicule (11).

2. Véhicule conforme à la revendication 1,
**caractérisée par**
- un habitacle (7) qui est fixé sur le support d'essieu avant (2) et le support d'essieu arrière (3),
- l'habitacle (7) étant fixé sur le support d'essieu avant (2) par l'intermédiaire d'au moins un palier libre (9) en direction longitudinale, et/ou
- l'habitacle (7) étant fixé sur le support d'essieu arrière (3) par l'intermédiaire d'au moins un palier libre en direction longitudinale (9), et/ou
- un dispositif d'équilibrage longitudinal (14) est intégré dans l'habitacle (7).

3. Véhicule conforme à l'une des revendications précédentes,
**caractérisé par** une seconde structure longitudinale porteuse (5) qui relie en supportant les charges, le support d'essieu avant (2) avec le support d'essieu arrière (3),
- la seconde structure longitudinale (5) est fixée sur le support d'essieu avant (2) par l'intermédiaire d'au moins un palier libre en direction longitudinale (9), et/ou
- la seconde structure longitudinale (5) est fixée sur le support d'essieu arrière (3) par l'intermédiaire d'au moins un palier libre en direction longitudinale (9), et/ou
- un dispositif d'équilibrage longitudinal (14) est intégré dans la seconde structure longitudinale (5).

4. Véhicule conforme à la revendication 3,
**caractérisé en ce que**
la seconde structure longitudinale porteuse (5) comporte au moins un support longitudinal (6) qui est monté essentiellement parallèlement au réservoir sous pression (4).

5. Véhicule conforme à la revendication 4,
**caractérisé en ce que**
la seconde structure longitudinale porteuse (5) comporte au moins deux supports longitudinaux (6), le réservoir (4) étant monté entre ces deux supports longitudinaux (6).

6. Véhicule conforme à l'une des revendications 2 à 5,
**caractérisé en ce que**
les paliers libres en direction longitudinale (9) et les dispositifs d'équilibrage longitudinaux (14) sont réalisés pour permettre d'obtenir entre le support d'essieu avant (2) et le support d'essieu arrière (3) un équilibrage de longueur d'au moins 3 mm, et de préférence d'au moins 8 mm.

7. Véhicule conforme à l'une des revendications précédentes,
**caractérisé en ce que**
les paliers fixes en direction longitudinale (8) sont réalisés pour permettre d'obtenir un équilibrage en hauteur entre le réservoir sous pression (4) et le support d'essieu avant (2) et/ou entre le réservoir sous pression (4) et le support d'essieu arrière (3) dans la direction de la hauteur du véhicule (13).

8. Véhicule conforme à l'une des revendications précédentes,
**caractérisé en ce que**
les paliers fixes en direction longitudinale (8) sont réalisés pour permettre d'obtenir un équilibrage transversal entre le réservoir sous pression (4) et le support d'essieu avant (2) et/ou entre le réservoir sous pression (4) et le support d'essieu arrière (3) dans la direction transversale (12) du véhicule.

9. Véhicule conforme à l'une des revendications précédentes,
**caractérisé en ce que**
le réservoir sous pression (4) est réalisé pour permettre la réception d'hydrogène.
